# EUROPEAN PATENT SPECIFICATION

(11) **EP 1 108 569 B1**
(45) Date of publication and mention of the grant of the patent: **04.03.2009**
(21) Application number: 00204491.5
(22) Date of filing: 13.12.2000
(51) Int. Cl.: B60G 9/02, B60B 35/14, B60G 17/005

(54) **Suspended rigid axle**
Gefederte Starrachse
Essieu rigide suspendu

(30) Priority: 14.12.1999 IT MI992586
(43) Date of publication of application: 20.06.2001
(73) Proprietor: DANA ITALIA S.p.A, 38062 Arco (Trento) (IT)
(72) Inventor: Blini, Aldo, 24040 Calvenzano (Bergamo) (IT)
(74) Representative: De Gregori, Antonella

(56) References cited:
- EP-A- 0 499 887
- DE-A- 3 834 693
- US-A- 5 447 321
- US-A- 5 879 016

## Description

The present invention refers to a suspended rigid axle.

In particular, reference will be made in what follows to a front axle of a tractor; it is, however, clear that an axle according to the present invention can be advantageously mounted on any type of vehicle designed to move around and/or work in off-road conditions, for example in fields, as well as on the road.

It is known that all vehicles provided with four wheels are indeterminate (i.e., statically redundant) structures, and, in order not to jump about when travelling, must have their wheels free to adapt to the other than perfect evenness of the ground.

Each pair of wheels is traditionally supported by an axle that may be fixed in various ways to the vehicle chassis. The structure of the axles proves particularly complicated for the front axle, which is required to perform the functions of steering and traction.

In traditional tractors, the front wheels are supported by an oscillating or rocking front axle. This solution, albeit economical and technically valid as long as the speed of the tractor has a limited value (less than 30-40 km/h), has proved altogether unsuitable for latest-generation tractors. The latter, in fact, have the possibility of moving around freely both off road, in fields, and on the road, at speeds that may even be high, the said speeds possibly reaching for the vehicles in question values of 50-60 km/h. At such speeds, a simple oscillating or rocking axle according to traditional embodiments proves not only very fatiguing for the tractor driver but also far from safe on account of the poor adherence of the wheels to the ground.

Document DE 3 834 693 discloses a suspended rigid axle according to the preamble of claim 1.

A purpose of the present invention is, therefore, to eliminate the technical problems referred to above by providing a suspended rigid axle that is safe in all driving conditions, both off road and on bumpy roads, as well as on asphalted roads, and at all vehicle speeds.

Another purpose of the present invention is to provide a suspended rigid axle that will guarantee high driving comfort for the driver, thus reducing psychophysical fatigue.

A further purpose of the present invention is to provide a suspended rigid axle that is substantially simple.

Yet another purpose of the present invention is to provide a suspended rigid axle that is substantially economical.

These and other purposes according to the present invention are achieved by providing a suspended rigid axle in accordance with Claim 1.

Other characteristics of the present invention are further defined in the subsequent claims.

Advantageously, the suspended rigid axle according to the present invention guarantees greater traction, and hence also a higher productivity as compared to traditional axles. In addition to enabling energy saving and lower tyre consumption, this fact makes possible an increase and amplification of the operating possibilities of the tractor.

In addition, the axle according to the present invention uses a large number of components of traditional axles, and is moreover very reliable.

An axle built according to the present invention affords a high self-stabilizing capacity and moreover makes it possible to increase considerably the capacity for damping the stresses resulting from possible impact on the vehicle from the variable conditions of the terrain.

In a preferred embodiment, the axle according to the present invention is provided with a damped element that can also be locked in position. This locking feature proves very useful for particular operations that involve, for example, the use of front loaders.

Further characteristics and advantages of a suspended rigid axle according to the present invention will emerge more evidently from the ensuing description, which is given to provide a non-limiting example, with reference to the annexed schematic drawings, in which:

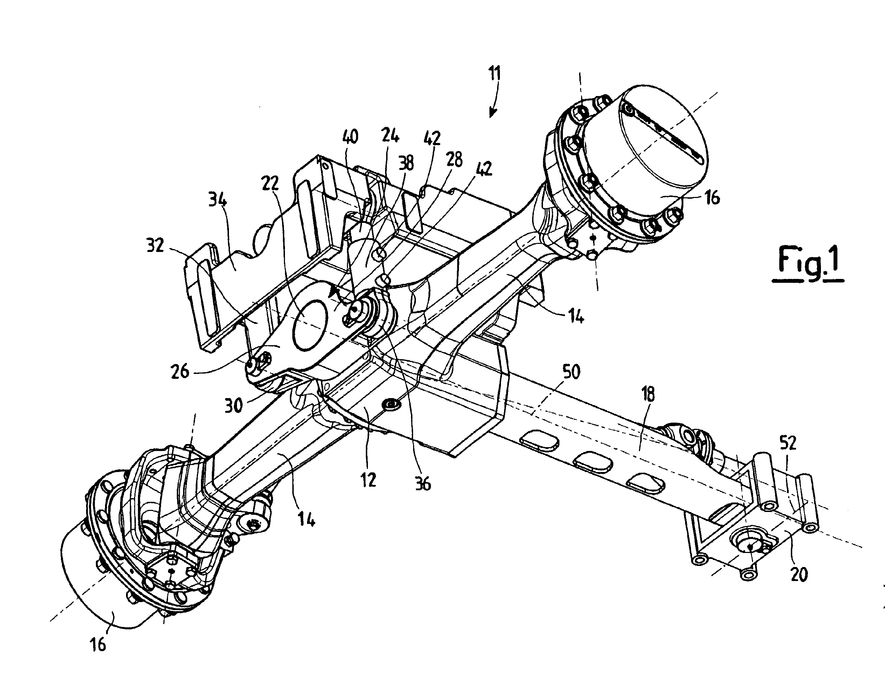

Figure 1 shows a perspective view of an axle according to the present invention, which is only partially fixed to a chassis of a tractor or the like;

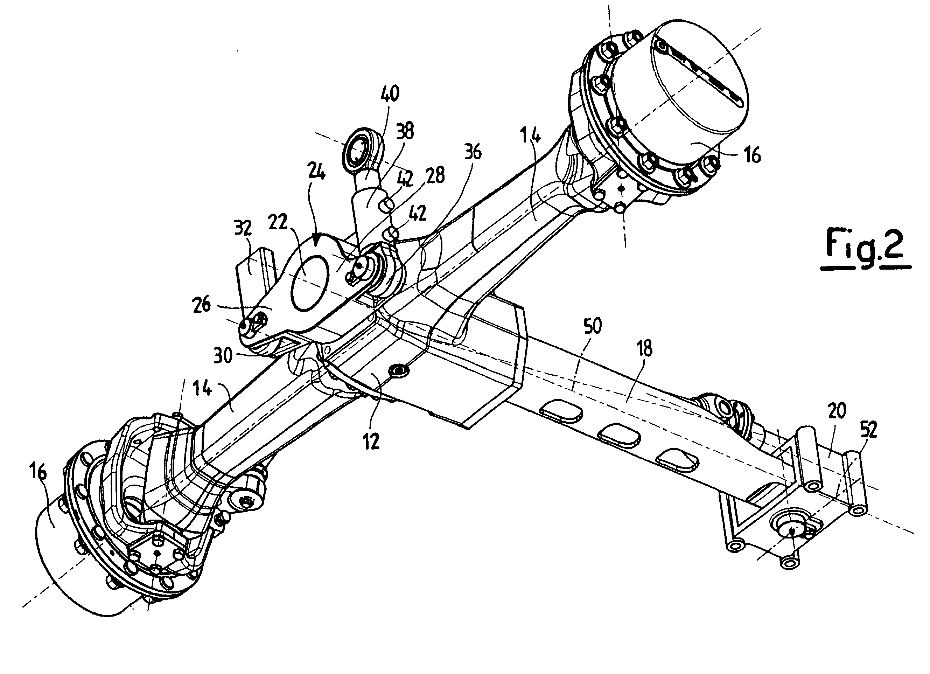

Figure 2 shows a perspective view of the axle of Figure 1, not fixed to the chassis of the tractor or the like;

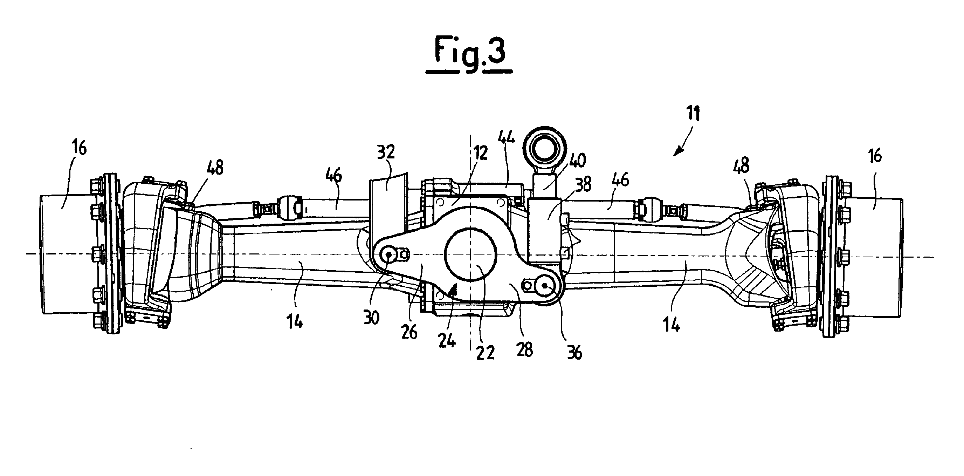

Figure 3 is a front elevation of the axle of Figure 2;

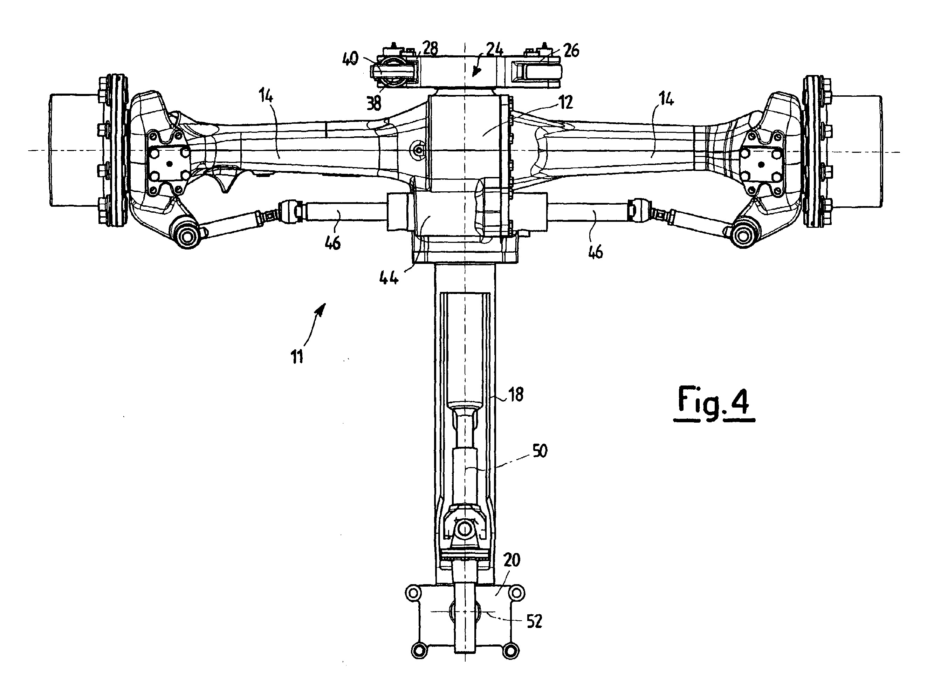

Figure 4 is a top plan view of the axle of Figure 2;

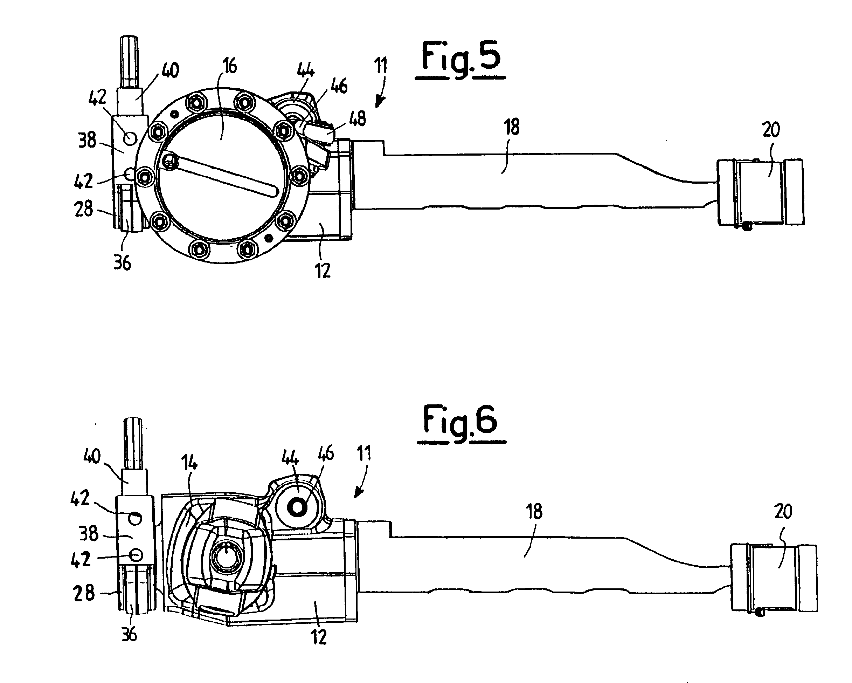

Figure 5 is a side elevation of axle of Figure 2; and
Figure 6 is a side elevation of the same axle without the wheel hubs.

With reference to the above figures, a suspended rigid axle is illustrated, designated, as a whole, by the reference number 11.

The axle 11 comprises a box-like central body 12 from which there extend two arms 14. Each of the arms 14 carries, articulated to one of its ends, a steering wheel hub 16. The wheel hubs 16 are also for traction and may be actuated in rotation, in a known way, each by an axle shaft contained within the arms 14 and connected to a differential contained inside the central body 12.

From the central body 12 there moreover extends a strut 18 at the free end of which is set a ball-and-socket joint 20, which is fixed to a chassis of a vehicle (item not shown) consisting of a tractor, an industrial vehicle, etc.

From the central body 12 there further extends, at one of its portions opposite to the one from which the strut 18 extends, a pin 22. Articulated on the pin 22 is a central portion of a lever 24 shaped like a plate, from which there extend two fork-like portions 26, 28.

A first fork-like portion 26 identifies a seat where there is connected, by means of a ball-and-socket joint 30, a bar 32 forming part of the chassis 34 of the vehicle.

A second fork-like portion 28, instead, identifies a seat where there is connected, by means of a further ball-and-socket joint 36, an end of a damped element 38, 40.

The damped element 38, 40 is made up of a hydraulic cylinder 38, inside which a piston that is integral with one end of a rod 40 can slide in a sealed way.

The free end of the rod 40 is articulated, also in this case by means of a ball-and-socket joint, to the chassis 34 of the vehicle.

The piston identifies two chambers, one between the crown of the cylinder 38 and the piston itself, and the other between the piston and the bottom of the cylinder 38. In each one of the said chambers, a union 42 opens, which is connected to a gas-charged accumulator.

The two gas-charged accumulators, which are of themselves known and are not illustrated for reasons of simplicity, comprise a casing inside which a separating diaphragm identifies two variable-volume chambers. A first chamber contains oil and is in communication with one of the two unions 42; the other chamber, instead, contains a gas for bestowing on the cylinder the damping effect.

Fixed at the top of the body 12, at a portion of the axle 11 opposite to the one where the lever 24 is connected, is an actuator 44 of the steering. Coming out of the actuator 44 are two articulated rods 46, each fixed to one of the wheel hubs 16 by means of a ball-and-socket joint 48. It is possible to control steering of the axle 11 by means of the actuator 44 and the articulated rods 46.

Operation of the suspended rigid axle according to the present invention is basically as described in what follows.

The axle 11 is previously anchored to the chassis 34 of the vehicle and subsequently the two unions 42 of the cylinder 38 are connected to the gas-charged accumulators.

When the axle 11 is mounted as specified underneath the chassis 34 of the vehicle, it may be operated in two different modes.

According to a first operating mode, the cylinder 38 does not have oil under pressure in its chambers, and the rod 40 comes down, bringing the piston that is integral with it into contact with the bottom of the cylinder 38.

In this situation, the damped element 38, 40 is locked in position, and the axle 11 operates as a traditional axle, being able only to oscillate or swing about an axis 50.

According to a second operating mode, instead, fluid under pressure is introduced into the two chambers of the cylinder 38.

In this case, any stresses on the chassis 34 of the vehicle or on the axle 11 itself move the rod 40 in one of two directions, either towards the inside or towards the outside of the cylinder 38.

In this situation, the lever 24 oscillates or rotates about the joint 30, and hence also the pin 22 oscillates or rotates with respect to the joint 30.

In practice, since the strut 18 is articulated to the chassis 34 by means of the ball-and-socket joint 20, the axle 11 oscillates or rotates substantially about an axis 52 passing through the ball-and-socket joint 20. At the same time, the oil contained in one of the chambers of the cylinder 38, passing into one of the gas-charged accumulators, dampens the oscillations. Of course, the axle 11 can also rotate about the axis 50 to adapt to the conditions of the terrain in an optimal manner.

In practice, it has been noted that the suspended rigid axle according to the invention ensures a high degree of driving comfort.

In addition, by absorbing the stresses and jolts, the damped element improves the on-road behaviour of the vehicle and guarantees a very high degree of safety.

Likewise worthy of note is the considerable practicality of the axle according to the present invention, which, albeit enabling phases of transport at high speed of the vehicle on which it is mounted, does not, however, lose the advantages of traditional axles. For this reason, it is envisaged that the damped element may be locked in position.

Also to be emphasized is the structural simplicity and interchangeability of pieces with traditional axles. This renders the axle according to the invention attractive to a wide range of users.

The suspended rigid axle thus conceived may undergo numerous modifications and variations, all falling within the scope of the present invention. In addition, all the items may be replaced with others that are technically equivalent.

In practice, the materials used, as well as the dimensions, may be any whatsoever according to the technical requirements.

## Claims

1. A suspended rigid axle (11) comprising a central body (12) from which there extend a strut (18) and two arms (14), each of which arms supports a wheel hub (16), articulated to a pin (22) which extends from said central body (12), there being at least one lever (24) which has a first portion (26) articulated to a chassis (34) of a vehicle, and a second portion (28) articulated to one end of a damped element (38, 40) which has its opposite end articulated to said chassis (34), said first portion (26) and said second portion (28) of said lever (24) being articulated, respectively to said chassis (34) and to said damped element (38, 40), by means of ball-and-socket joints (30, 36), said lever (24) being articulated to said pin (22) in a substantially central portion of said lever (24) **characterized in that** the three points of articulation of said lever (24) consisting in said ball-and-socket joints (30, 36) and said pin (22) are not positioned along one and the same line.

2. An axle (11) according to Claim 1, **characterized in that** said lever (24) is articulated to said central body (12) at one portion of said central body (12) opposite to the portion from which said strut (18) extends.

3. An axle (11) according to Claim 1, **characterized in that** said first portion (26) and said second portion (28) of said lever (24) are shaped in such a way as to form a fork.

4. An axle (11) according to Claim 1, **characterized in that** said damped element (38, 40) is articulated to said chassis (34) by means of a ball-and-socket joint.

5. An axle (11) according to Claim 1, **characterized in that** said first portion (26) of said lever (24) is articulated to said chassis (34) by means of at least one rod (32).

6. An axle (11) according to Claim 1, **characterized in that** one end of said strut (18) is connected to said chassis (34) by means of at least one ball-and-socket joint (20).

7. An axle (11) according to Claim 1, **characterized in that** said damped element (38, 40) comprises at least one hydraulic cylinder (38).

8. An axle (11) according to Claim 1, **characterized in that** it is a steering axle.

9. An axle (11) according to Claim 1, **characterized in that** it is a traction axle.

## Patentansprüche

1. Gefederte starre Achse (11) mit einem Zentralkörper (12), von dem sich eine Strebe (18) und zwei Arme (14) erstrecken, wobei jeder der Arme eine Radnabe (16) trägt, die gelenkig an einem sich von dem Zentralkörper (12) erstreckenden Bolzen (22) angebracht ist, wobei wenigstens ein Hebelarm (24) vorgesehen ist, der einen gelenkig an einer Chassis (34) eines Fahrzeugs angebrachten ersten Abschnitt (26) und einen zweiten Abschnitt (28) aufweist, der gelenkig an einem Ende eines Dämpfungselements (38, 40) angebracht ist, dessen entgegengesetztes Ende gelenkig an der Chassis (34) angebracht ist, wobei der erste Abschnitt (26) und der zweite Abschnitt (28) des Hebelarms (24) jeweils mittels Kugelgelenken (30, 36) gelenkig an der Chassis (34) und dem Dämpfungselement (38, 40) angebracht sind und der Hebelarm (24) in einem im Wesentlichen zentralen Abschnitt des Hebelarms (24) gelenkig an dem Bolzen (22) angebracht ist, **dadurch gekennzeichnet, dass** die drei Gelenkverbindungspunkte des Hebelarms (24), die in den Kugelgelenken (30, 36) und dem Bolzen (22) bestehen, nicht auf der gleichen Linie angeordnet sind.

2. Achse (11) nach Anspruch 1, **dadurch gekennzeichnet, dass** der Hebelarm (24) gelenkig an einem Abschnitt des Zentralkörpers (12) angebracht ist, der entgegengesetzt zu dem Abschnitt liegt, von dem sich die Strebe (18) erstreckt.

3. Achse (11) nach Anspruch 1, **dadurch gekennzeichnet, dass** der erste Abschnitt (26) und der zweite Abschnitt (28) des Hebelarms (24) in Form einer Gabel ausgebildet sind.

4. Achse (11) nach Anspruch 1, **dadurch gekennzeichnet, dass** das Dämpfungselement (38, 40) mittels eines Kugelgelenks gelenkig an der Chassis (34) angebracht ist.

5. Achse (11) nach Anspruch 1, **dadurch gekennzeichnet, dass** der erste Abschnitt (26) des Hebelarms (24) mittels wenigstens eines Stabs (32) gelenkig an der Chassis (34) angebracht ist.

6. Achse (11) nach Anspruch 1, **dadurch gekennzeichnet, dass** ein Ende der Strebe (18) mittels wenigstens eines Kugelgelenks (20) mit der Chassis (34) verbunden ist.

7. Achse (11) nach Anspruch 1, **dadurch gekennzeichnet, dass** das Dämpfungselement (38, 40) wenigstens einen Hydraulikzylinder (38) aufweist.

8. Achse (11) nach Anspruch 1, **dadurch gekennzeichnet, dass** die Achse eine Lenkachse ist.

9. Achse (11) nach Anspruch 1, **dadurch gekennzeichnet, dass** die Achse eine Transportachse ist.

## Revendications

1. Essieu (11) rigide suspendu comprenant un corps central (12) à partir duquel s'étendent un étai (18) et deux bras (14), chaque bras supportant un moyeu de roue (16), au moins un levier (24) monté articulé sur une broche (22) qui s'étend à partir dudit corps central (12), ledit levier présentant une première partie (26) montée articulée sur un châssis (34) d'un véhicule, et une seconde partie (28) montée articulée sur une extrémité d'un élément (38, 40) d'amortissement, dont l'extrémité opposée est montée articulée sur ledit châssis (34), ladite première partie (26) et ladite seconde partie (28) dudit levier (24) étant montées articulées respectivement sur le châssis (34) et sur l'élément d'amortissement (38, 40) au moyen de joints (30, 36) à bille, ledit levier (24) étant monté articulé sur ladite broche (22) dans une partie sensiblement centrale dudit levier (24), **caractérisé en ce que** les trois points d'articulation dudit levier (24) composés desdits joints à bille (30, 36) et de ladite broche (22) ne sont pas positionnés le long de la même ligne.

2. Essieu (11) selon la revendication 1, **caractérisé en ce que** ledit levier (24) est monté articulé sur le corps central (12) sur une partie dudit corps central (12) opposée à la partie à partir de laquelle ledit étai (18) s'étend.

3. Essieu (11) selon la revendication 1, **caractérisé en ce que** ladite première partie (26) et ladite seconde partie (28) dudit levier (24) sont formées de manière à former une fourche.

4. Essieu (11) selon la revendication 1, **caractérisé en ce que** ledit élément (38, 40) d'amortissement est monté articulé sur le châssis (34) au moyen d'un joint à bille.

5. Essieu (11) selon la revendication 1, **caractérisé en ce que** ladite première partie (26) dudit levier (24) est montée articulée sur le châssis (34) au moyen d'au moins une tige (32).

6. Essieu (11) selon la revendication 1, **caractérisé en ce qu'**une extrémité dudit étai (18) est reliée audit châssis (34) au moyen d'au moins un joint à bille (20).

7. Essieu (11) selon la revendication 1, **caractérisé en ce que** ledit élément d'amortissement (38, 40) comprend au moins un vérin hydraulique (38).

8. Essieu (11) selon la revendication 1, **caractérisé en ce qu'**il est un essieu directeur.

9. Essieu (11) selon la revendication 1, **caractérisé en ce qu'**il est un essieu de traction.
